## Europäisches Patentamt

## European Patent Office

## Office européen des brevets

(19)

(11) Veröffentlichungsnummer: **0 195 774**
**B1**

(12) **EUROPÄISCHE PATENTSCHRIFT**

(45) Veröffentlichungstag der Patentschrift:
01.03.89

(51) Int. Cl.⁴: **G 02 C 7/02**

(21) Anmeldenummer: **85902459.8**

(22) Anmeldetag: **15.05.85**

(86) Internationale Anmeldenummer:
**PCT/DE 85/00166**

(87) Internationale Veröffentlichungsnummer:
**WO 86/01911 (27.03.86** Gazette 86/7)

(54) **BRILLENGLAS FÜR EINE HALBBRILLE.**

(30) Priorität: **15.09.84 DE 3433916**

(43) Veröffentlichungstag der Anmeldung:
**01.10.86 Patentblatt 86/40**

(45) Bekanntmachung des Hinweises auf die Patenterteilung:
**01.03.89 Patentblatt 89/9**

(84) Benannte Vertragsstaaten:
**AT BE CH DE FR GB IT LI LU NL SE**

(56) Entgegenhaltungen:
**DE-A- 3 018 578**
**DE-A- 3 116 524**
**GB-A- 2 019 030**

(73) Patentinhaber: **Optische Werke G. Rodenstock,
Isartalstrasse 43, D-8000 München 5 (DE)**

(72) Erfinder: **BARTH, Rudolf, Sommerweg 1,
D-8061 Vierkirchen (DE)**

(74) Vertreter: **Schiller, Walter, Dr. et al, Kanzlei Münich,
Steinmann, Schiller Willibaldstrasse 36-38,
D-8000 München 21 (DE)**

EP 0 195 774 B1

## Beschreibung

Die Erfindung bezieht sich auf eine Halbbrille.

Als Halbbrille bezeichnet man eine Brille, bei der nur der Bereich des Brillenglases in die Brillenfassung eingeschliffen ist, der nicht zum Sehen in die Ferne benutzt wird. Bei den bekannten Halbbrillen werden sphärische oder torische Einstärkengläser verwendet, bei denen «einfach die obere Hälfte» weggelassen wird.

Die optische Wirkung der bekannten Halbbrillen wird dabei so gewählt, daß sie dem Brillenträger ein deutliches Sehen für kleine Entfernungen, d.h. für typische Lese-Entfernungen von ca. 40 cm erlaubt. Damit haben aber die bekannten Halbbrillen den Nachteil, daß sie das Sehen in mittlere Entfernungen, also beispielsweise in Entfernungen von etwa einem Meter nicht mit dem gewohnten Seh-Komfort erlauben.

Der Erfindung liegt die Aufgabe zugrunde, eine auch im Zwischenbereich akkommodationsunterstützende Halbbrille anzugeben.

Diese Aufgabe wird erfindungsgemäß durch die im kennzeichnenden Teil des Patentanspruchs 1 angegebenen Merkmale gelöst.

Erfindungsgemäß nimmt die Wirkung des Halbbrillen-Glases vom oberen Randbereich nach unten progressiv auf den Wert zu, den der Brillenträger zum Sehen in die Nähe benötigt. Zu dieser Zunahme des Brechwerts trägt mindestens eine Fläche bei.

Bei einer in Anspruch 2 gekennzeichneten vorteilhaften Weiterbildung der Erfindung ist die prismatische Wirkung am oberen Rand der Halbbrille Null, damit tritt kein störender Bildsprung auf, wenn sich der Blick des Brillenträgers bei Blickwechsel aus der Ferne in die Nähe (und umgekehrt) senkt (bzw. hebt).

Die Wirkung des Brillenglases im oberen Randbereich kann 0 dpt sein. Besonders vorteilhaft ist es jedoch, wenn das Brillenglas im oberen Randbereich eine von Null verschiedene Wirkung hat, da der typische Halbbrillenträger, der ein emmetrop Presbyop ist, beim Blick in die Ferne über die Halbbrillenoberkante sieht. Erst bei einer Blicksenkung, bei der er typischerweise in mittlerer Sehentfernung befindliche Gegenstände betrachten will, blickt der Halbbrillenträger durch den oberen Teil der progressiven Halbbrille. Die Halbbrille mit einer von Null verschiedenen Wirkung im Bereich ihrer oberen Kante ermöglicht ihm dann für diese endlichen Entfernungen ein deutliches Sehen, was der Brillenträger mit Akkommodation allein nicht mehr vermag.

Ein oberer Randbereich mit einer von Null verschiedenen Wirkung hat darüber hinaus den weiteren Vorteil, daß er die «wirksame» Addition des Brillenglases gegenüber der «flächentheoretischen» Addition um den Wert der Wirkung im oberen Randbereich erhöht. Damit ist gemeint, daß eine Halbbrille mit einer Addition, d.h. einem Unterschied zwischen der Wirkung im Nahbezugspunkt und dem (auf der Halbbrille nicht mehr vorhandenen) Fernbezugspunkt von 2 dpt und einer Wirkung im oberen Randbereich von 1 dpt für den Brillenträger die gleiche Wirkung hat wie eine Fläche mit einer Addition von 3 dpt und der Wirkung 0 dpt im oberen Randbereich. Eine derartige Wirkung von etwa 1 dpt benötigt aber der emmetrop Presbyope genau zum deutlichen Sehen in endliche Entfernungen von ca. 1 m. Er findet damit für diese Entfernung und alle kürzeren Entfernungen bis hin zum Leseabstand die entsprechenden Wirkungen auf der Fläche der Halbbrille vor.

Dennoch ist die progressive Fläche der Halbbrille nur so zu bemessen, als hätte sie eine Addition von nur 2 dpt. Eine derartige Fläche mit einer Addition von (beispielsweise) nur 2 dpt hat gegenüber einer Fläche mit einer Addition von (beispielsweise) 3 dpt den Vorteil, daß die Progressionszone breiter ist: Nach dem Satz von Minkwitz ist nämlich die Breite der Progressionszone (bzw. des sogenannten Progressionskanals) umgekehrt proportional zum Wirkungsanstieg.

Natürlich können beide Flächen des erfindungsgemäßen Brillenglases für eine Halbbrille zum Wirkungsanstieg vom oberen Randbereich nach unten beitragen. Besonders vorteilhaft ist es jedoch gemäß Anspruch 4, wenn nur eine Fläche zum Wirkungsanstieg beiträgt und die andere Fläche sphärisch oder torisch ausgebildet ist. Hierdurch ergibt sich nicht nur ein besonders einfacher Aufbau des Brillenglases, sondern es ist beispielsweise auch eine Astigmatismuskorrektor möglich.

Prinzipiell kann man für das erfindungsgemäße Brillenglas für eine Halbbrille jedes bekannte Brillenglas mit «weggeschnittenem» Fernteil verwenden. Ein geeignetes bekanntes progressives Brillenglas ist beispielsweise in der DE-OS 2 814 916 beschrieben (auf diese Druckschrift wird im übrigen bezüglich aller hier nicht näher erläuterten Bezeichnungen, Definitionen etc. ausdrücklich Bezug genommen).

Besonders vorteilhaft ist es jedoch, wenn für das erfindungsgemäße progressive Brillenglas ein progressives Brillenglas verwendet wird, wie es in der nicht vorveröffentlichten älteren deutschen Patentanmeldung P 34 30 334 beschrieben ist. In dieser Patentanmeldung wird von der Erkenntnis ausgegangen, daß eine progressive Fläche unvermeidlich einen gewissen Astigmatismus aufweisen muss. Dieser Astigmatismus kann entweder in bestimmten Teilen der Fläche weitgehend konzentriert oder einigermaßen gleichmässig über die gesamte Fläche verteilt werden. Erfindungsgemäß ist nun erkannt worden, daß ein für das Sehen im Nahbereich und im Zwischenbereich besonders geeignetes progressives Brillenglas weder dadurch erhalten werden kann, daß der Astigmatismus gleichmäßig über die Fläche verteilt wird, noch dadurch, daß der Astigmatismus in die seitlichen unteren Randbereiche und damit in die Progressionszone abgedrängt wird, da in beiden Fällen der Astigmatismus in Verbindung mit der in der Progressionszone erforderlichen Zunahme des Flächenbrechwerts die Progressionszone zu einem schmalen Kanal verengt, in dem lediglich deutliches Sehen möglich ist. Es ist nun erkannt worden, daß es für ein progressives Brillenglas, das vor allem im Nah- und im Zwischenbereich in einem großen Teil der Fläche ein deutliches Sehen erlaubt, erforderlich und möglich ist, den Hauptanteil des Flächenastigmatismus in einen Bereich zu verlagern, in dem die Wirkung praktisch nicht ansteigt. Hierdurch erhält man eine weitgehend astigmatismusfreie und vergleichsweise breite Progressionszone, die ein deutliches Sehen im Zwischenbereich erlaubt. Wählt man nun als den Bereich, in den der Astigmatismus verlagert ist, den Fernteil, der ja bei einer Halbbrille wegfällt, so erhält man ein Brillenglas, das auf allen benutzten Bereichen einen vergleichsweise kleinen Astigmatismus hat, und damit optimale Voraussetzungen für deutliches Sehen bietet.

Bei einem bevorzugten Ausführungsbeispiel des erfindungsgemäßen Brillenglases für eine Halbbrille trägt zum Wirkungsanstieg nur eine Fläche bei, die entsprechend der älteren deutschen Patentanmeldung ausgebildet ist; als Bereich, in den der Hauptanteil des Astigmatismus verlagert ist, ist der Fernteil gewählt, d.h. der zum Sehen in die Ferne benutzte Bereich, und damit der Bereich, auf den bei einer Halbbrille verzichtet wird. Deshalb ist keine Kompensation des Astigmatismus, der aus dem benutzten Teil der Fläche «hinausgedrängt» worden ist, erforderlich. Man kann damit darauf verzichten, auch die zweite Fläche asphärisch auszubilden, und statt dessen eine rein sphärisch oder torisch ausgebildete zweite Fläche verwenden. Durch die Verwendung einer zum Wirkungsanstieg beitragenden Fläche gemäß der genannten älteren Patentanmeldung erhält man ein progressives Brillenglas für eine Halbbrille, das in dem Bereich, in dem die Wirkung ansteigt, nur einen geringen (unerwünschten) Astigmatismus aufweist, und das im Nahteil praktisch keinen Astigmatismus hat.

Vor allem aber ist bei dieser progressiven Fläche der Nahteil wesentlich größer als bei bekannten progressiven Flächen, so daß ein problemloses Sehen «in die Nähe» über einen großen Bereich ohne Kopfbewegung möglich ist. Diese erfindungsgemäß vorgesehene progressive Fläche hat darüber hinaus folgenden weiteren Vorteil: Bekanntlich ist beim emmetrop Presbyopen eine erhöhte Verzeichnungsempfindlichkeit vorhanden. Zu dem wirkt sich der bei Halbbrillen üblicherweise deutliche größere Hornhautscheitelabstand im Sinne einer Verengung der aberrationsfreien Glasbereiche aus. Bei den üblichen Progressivgläsern der bekannten Konzeptionen wird hierdurch insbesondere der Progressionskanal in einer Weise verengt, daß er kaum noch zum deutlichen Sehen benutzt werden kann. Die erfindungsgemäß vorgesehene progressive Fläche mit neuer Flächenkonzeption schafft hier Abhilfe.

Die zum Wirkungsanstieg beitragende Fläche des erfindungsgemäßen Brillenglases kann — abgesehen davon, daß sie so gestaltet ist, daß der Astigmatismus in einen bestimmten Bereich oder bestimmte Bereiche verschoben ist — einen ähnlichen Aufbau wie bekannte Gläser haben.

Die Berechnung der zum Wirkungsanstieg beitragenden Fläche des erfindungsgemäßen Brillenglases für eine Halbbrille kann dabei, wie bereits in der P 34 30 334.1 ausgeführt, und in Anspruch 8 beansprucht, unter Verwendung periodischer Funktionen erfolgen, wie sie in der DE-OS 2 814 916 angegeben sind.

Ferner können die einzelnen zum Wirkungsanstieg beitragenden Flächen auch stückweise mit stetiger 2. Ableitung zusammengesetzt sein. Auch können Flächeneigenschaften vorgegeben und die Flächen dann mit Spline-Funktionen berechnet werden.

Dabei können an sich bekannte Rechnungsgänge verwendet werden, wobei vorteilhafterweise zunächst die Progressionszone optimiert wird, ohne daß den Flächeneigenschaften des Fernteils Beachtung geschenkt wird.

Das erfindungsgemäße progressive Brillenglas kann darüber hinaus ohne weiteres so gestaltet werden, daß in der Progressionszone die Linien konstanter Wirkung weitgehend horizontal verlaufen. Zu den Vorteilen dieses Verlaufs der Linien konstanter Wirkung wird auf die DE-AS 2 610 203 verwiesen.

Darüber hinaus hat das erfindungsgemäße progressive Brillenglas den überraschenden Vorteil, daß die Verzeichnung gering ist.

Der erfindungsgemäße Gedanke, den störenden Flächenastigmatismus eines progressiven Brillenglases mittels mathematischer Methoden in den bei einer Halbbrille weggefallenen Bereich zu verlagern, läßt eine weitestgehende gestalterische Freiheit zu:

Die Hauptmeridiane der zum Wirkungsanstieg beitragenden Flächen können in bekannter Weise als Nabelpunktlinie ausgebildet sein, oder einen Astigmatismus aufweisen. Dabei ist es möglich, diesen Astigmatismus sowie gegebenenfalls einen in der Progressionszone vorhandenen Astigmatismus mittels einer ebenfalls asphärisch ausgebildeten Gegenfläche zu kompensieren.

Die Hauptmeridiane können gewunden sein, d.h. die hauptmeridiankurven liegen nicht in einer Ebene; die Hauptmeridiankurven können aber auch eben sein und das Glas verschwenkt in die Brillenfassung eingebaut werden.

Natürlich ist es möglich, das erfindungsgemäße Brillenglas, das mit einem gewundenen Hauptmeridian versehen ist oder verschwenkt in die Halbbrillen-Fassung eingeschliffen werden soll, so zu berechnen, daß es in der Einbaulage horizontalsymmetrisch ist.

Besonders vorteilhaft ist es jedoch, daß der große, nahezu astigmatismusfreie Nahteil sowie die breite Progressionszone, in der ein deutliches Sehen möglich ist, es auch erlauben, das Glas ohne Verschwenkung in die Brillenfassung einzubauen, ohne daß sich physiologische Beeinträchtigungen ergeben würden.

Damit erhält man ohne großen Aufwand bei der Berechnung ein horizontalsymmetrisches Glas, das bei einem verschwenkten Einbau oder bei einem gewundenen Hauptmeridian nur mit großem Aufwand zu berechnen ist, und darüber hinaus auch die Fertigung von sogenannten «linken» und «rechten» Gläsern notwendig macht.

Überraschenderweise hat es sich herausgestellt, daß ein derartiges progressives Brillenglas für eine Halbbrille nicht nur von rechtsichtigen Presbyopen, also Personen, die für die Ferne keine Korrektur benötigen, sondern auch von schwach fehlsichtigen Presbyopen hervorragend akzeptiert wird.

Die in der vorstehend genannten älteren Patentanmeldung P 34 40 334.0 beschriebenen Flächen zeichnen sich in der Progressionszone durch einen Verlauf der Krümmungsradien der sogenannten Ortogonalschnitte aus, der von dem beispielsweise in der US-PS 2 878 721 oder der DE-AS 2 044 639 angegebenen Verlauf vollständig abweicht: Gemäß diesem älteren Vorschlag nimmt in der Umgebung des Hauptmeridians bei der Vorderfläche der Krümmungsradius der Orthogonalschnitte zu und bei der Rückfläche ab, während er bei dem in der Patentanmeldung P 34 30 334.0 beschriebenen Brillenglas ab- bzw. zunimmt. Dieses Flächen gemäß der oben genannten älteren Patentanmeldung charakterisierende Verhalten des Krümmungsradius ist in Anspruch 5 beansprucht.

In jedem Falle ist es besonders vorteilhaft, wenn das Brillenglas im Anschluß an den Bereich, in dem die Wirkung progressiv zunimmt, einen Bereich mit konstanter oder nahezu konstanter Wirkung hat (Anspruch 6), der gemäß Anspruch 7 praktisch sphärisch und damit astigmatismusfrei ausgebildet sein sollte. Daneben ist es auch möglich, für Brillenträger mit Nahastigmatismus einen Nahteil mit torischer Wirkung vorzusehen.

Ein Ausführungsbeispiel der Erfindung wird nachstehend unter Bezugnahme auf die Zeichnung näher beschrieben, in der zeigen:

Fig. 1 schematisch den bei einer Halbbrille verwendeten Teil eines progressiven Brillenglases,

Fig. 2 tabellarisch die Pfeilhöhen und Horizontal-Krümmungsradien der zum Wirkungsanstieg beitragenden Fläche eines ersten Ausführungsbeispiels der Erfindung,

Fig. 3 den Verlauf des Hauptmeridians des Ausführungsbeispiels gemäss Fig. 2,

Fig. 4 Linien gleichen Astigmatismus eines progressiven Brillenglases für eine Halbbrille, bei dem die Vorderfläche gemäß Fig. 2 verwendet wird, und

Fig. 5 die Wirkungslinien des Brillenglases gemäß Fig. 4.

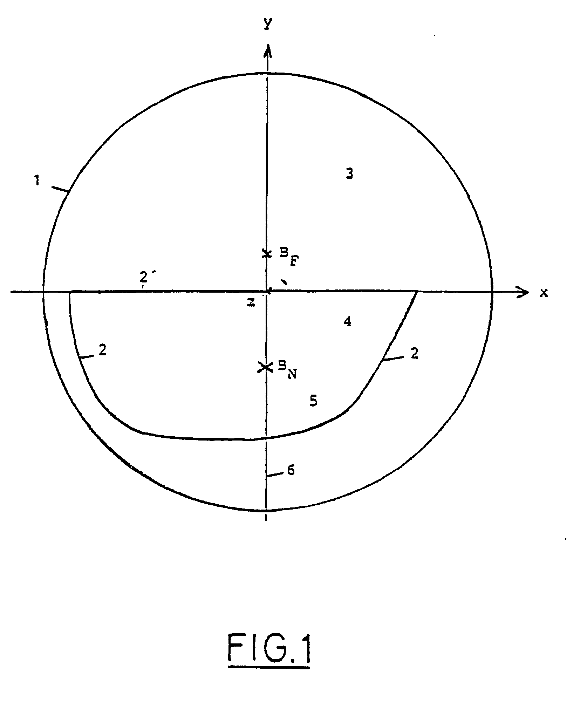

Fig. 1 zeigt zur Erläuterung des prinzipiellen Aufbaus eines erfindungsgemäßen progressiven Brillenglases für eine Halbbrille eine Aufsicht auf ein Ausführungsbeispiel. Mit 1 ist ein sog. rohrundes Glas, wie es beispielsweise für eine Vollbrille verwendet wird, und mit 2 die Form der Halbbrille bezeichnet. Bei dem gezeigten Ausführungsbeispiel verläuft der obere Rand 2' der Halbbrille durch die geometrische Mitte des rohrunden Glases 1, d.h. nur Flächenpunkte mit y < 0 sind auf der Halbbrille vorhanden. Der obere Rand kann aber entsprechend den bekannten Anpaßregeln innerhalb der Progressionszone 3 auch anders verlaufen.

Bei dem gezeigten Ausführungsbeispiel ist (ohne Beschränkung der Allgemeinheit) die Vorderfläche eine progressive Fläche, d.h. ihre Flächenbrechkraft nimmt vom Fernteil 3 über die Progressionszone 4 zum Nahteil 5 hin zu. Die Innenfläche trägt nicht zum Wirkungsanstieg bei und kann eine sphärische oder torische Fläche sein.

$B_F$ und $B_N$ sind der Fern- bzw. Nahbezugspunkt nach DIN 58208, die auf dem Hauptmeridian 6 der Fläche liegen.

Ferner ist in Fig. 1 die Lage des im folgenden verwendeten kartesischen Koordinatensystems mit den Achsen x, y und z eingezeichnet.

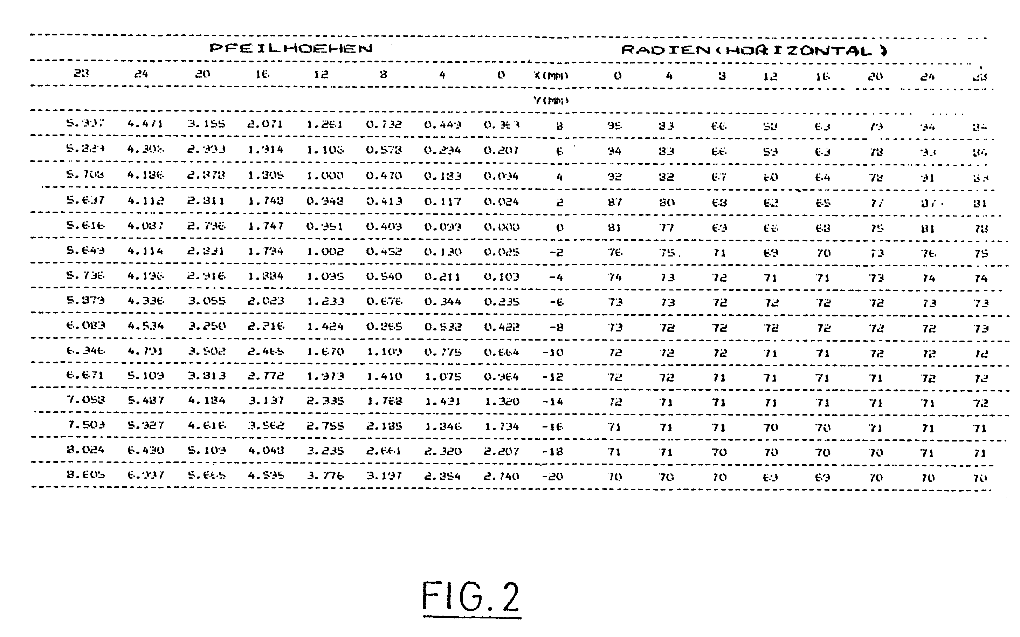

Im folgenden soll ein numerisches Ausführungsbeispiel der Erfindung in Verbindung mit den Fig. 2 bis 5 vorgestellt werden.

Das Ausführungsbeispiel gemäß diesen Figuren weist eine progressive Vorderfläche auf, deren Flächenbrechkraft auf dem Hauptmeridian 6 von ca. 5,6 dpt auf ca. 7,6 dpt ansteigt, d.h. die sog. Addition A beträgt 2,0 dpt. (Brechungsindex n = 1,525). Die Innenfläche ist (ohne Beschränkung der Allgemeinheit) eine sphärische Fläche mit einer Flächenbrechkraft von ca. −5,6 dpt. Die Berechnung der Vorderfläche ist mit dem in der DE-OS 28 14 916 angegebenen Formelsatz vorgenommen worden.

Fig. 2 zeigt eine Tabelle, in deren linkem Teil die Pfeilhöhen p, d.h. der in Richtung der optischen Achse (3) gemessene Abstand eines Flächenpunkts (x, y) der Vorderfläche vom Scheitel der Vorderfläche angegeben sind. Im rechten Teil der Tabelle sind für diese Flächenpunkte die Horizontal-Krümmungsradien angegeben, d.h. die Krümmungsradien der Schnittlinien, die sich durch den Schnitt von zur x/z-Ebene parallelen Ebene mit der progressiven Vorderfläche ergeben.

Bei dem gezeigten Ausführungsbeispiel ist der Hauptmerdiian 6 der Vorderfläche eben und liegt in der Glasmitte (x = 0). Ferner ist der Hauptmeridian eine Nabelpunktlinie. (Bei dem gezeigten Ausführungsbeispiel ist das Glas ohne Beschränkung der Allgemeinheit symmetrisch zum Hauptmeridian.)

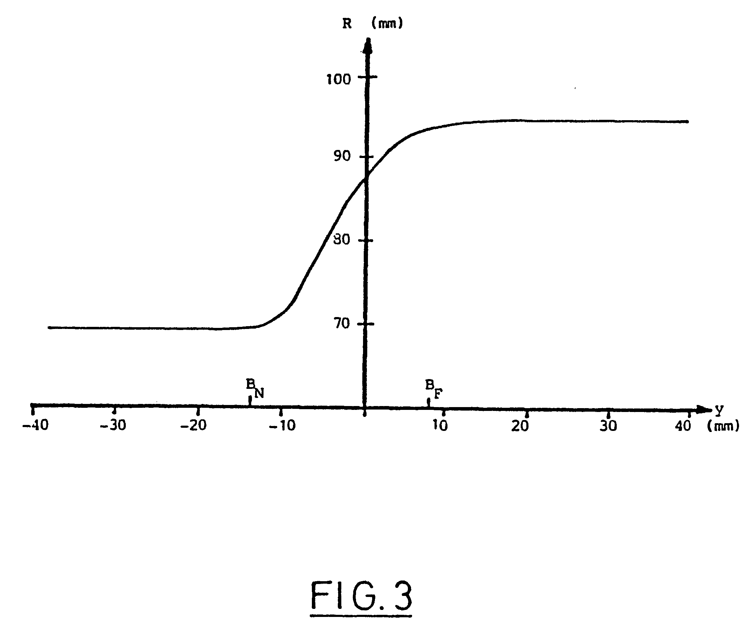

Fig. 3 zeigt die Abhängigkeit des vertikalen Krümmungsradius R des Hauptmeridians von y für das dargestellte Ausführungsbeispiel. Wie man sieht, ist die Flächenbrechkraft auf dem Hauptmeridian im Fernteil und im Nahteil nahezu konstant, und nimmt in der Progressionszone weitgehend linear vom Wert des Fernteils auf den Wert des Nahteils zu.

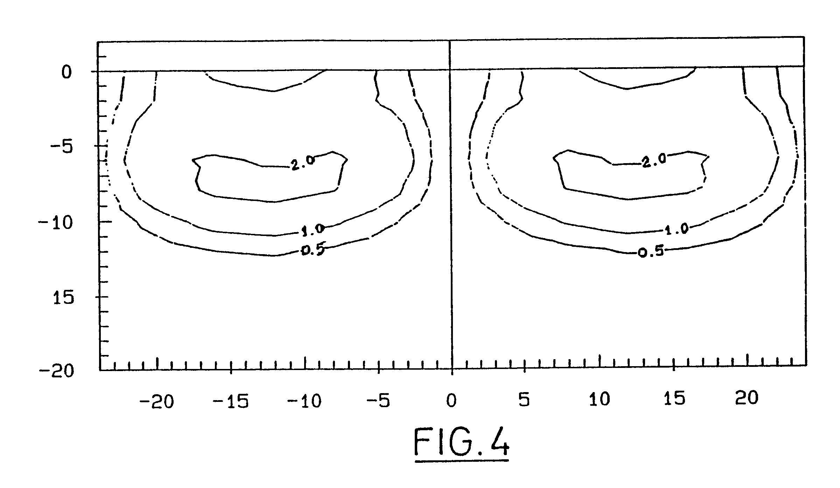

Fig. 4 zeigt den Flächenastigmatismus der Vorderfläche 1 gemäss Fig. 2. Der Flächenastigmatismus im (nicht dargestellten) Fernteil wäre außerhalb des Hauptmeridians sehr gross. In der etwa von y = +6 bis y = −14 mm reichenden Progressionszone ist der Flächenastigmatismus vergleichsweise klein und im grossen Nahteil sehr gering, d.h. kleiner als 0,5 dpt.

Bei einer Halbbrille, bei der ja nur die Punkte der Fläche mit y < 0 vorhanden sind, stört jedoch der große Flächenastigmatismus der Vorderfläche im «weggeschnittenen» Fernteil nicht. Positiv wirken sich jedoch die große nutzbare Progressionszone 4 und der sehr große Nahteil 5 aus, der ein angenehmes Sehen in die Nähe ohne Kopfbewegungen gestattet.

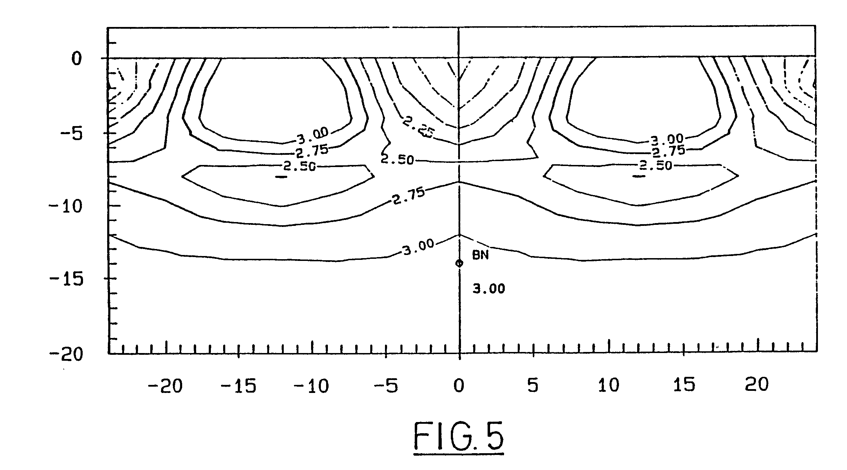

Ferner ist sehr günstig, daß — wie Fig. 5 zeigt — die Wirkungslinien in der Progressionszone insbesondere im Bereich des Hauptmeridians horizontal verlaufen.

Vorstehend ist ein Ausführungsbeispiel der Erfindung beschrieben worden. Im Rahmen des erfindungsgemäßen Grundgedankens, eine progressive Halbbrille zu realisieren, sind die verschiedensten Modifikationen möglich.

Der obere Rand der Halbbrille muß nicht notwendigerweise wie bei dem gezeigten Ausführungsbeispiel mit der Flächenmitte zusammenfallen. Vielmehr kann der obere Rand in Übereinstimmung mit den bekannten Anpaßregeln beliebig innerhalb der Progressionszone so gewählt werden, dass der Brillenträger beim Blicken in die Ferne «noch über den Rand der Brille hinausschaut».

Die progressive Fläche kann ferner auch die Innenfläche sein. Natürlich können auch beide Flächen progressiv ausgebildet sein.

In dem Falle, daß nur eine Fläche progressiv ausgebildet ist, muß die andere Fläche (bei dem gezeigten Ausführungsbeispiel die Innenfläche) nicht notwendigerweise sphärisch oder torisch sein. Sie kann auch — ohne zum Wirkungsanstieg beizutragen — asphärisch ausgebildet sein.

Eine asphärische zweite Fläche, die zum Wirkungsanstieg beiträgt oder nicht beiträgt, kann beispielsweise so ausgebildet sein, daß sie den Astigmatismus in der Progressionszone bei einer Fläche gemäß der älteren deutschen Patentanmeldung P 34 30 334.0 zumindest teilweise kompensiert.

Die Hauptmeridiane beider Flächen können eben oder gewunden sein; anstelle einer Nabelpunktlinie als Hauptmeridian kann auch eine Linie verwendet werden, die wenigstens teilweise einen definierten Astigmatismus aufweist; wenn beide Flächen zum Wirkungsanstieg beitragen, d.h. progressiv ausgebildet sind, kann auch eine Fläche eine Nabelpunktlinie als Hauptmeridian aufweisen, während der Hauptmeridian der anderen Fläche definierten Astigmatismus aufweist.

Im übrigen kann das erfindungsgemässe Brillenglas aus Silikatglas, einem Kunststoffmaterial oder einem Glas mit einem Brechungsindexgradienten hergestellt werden.

## Patentansprüche

1. Brillenglas für eine Halbbrille, dadurch gekennzeichnet, daß das Brillenglas mindestens eine asphärische Fläche aufweist, deren Flächenbrechkraft vom oberen Randbereich des Brillenglases nach unten progressiv zunimmt.

2. Brillenglas nach Anspruch 1, dadurch gekennzeichnet, daß das Brillenglas im oberen Randbereich die prismatische Wirkung null hat.

3. Brillenglas nach Anspruch 1 oder 2, dadurch gekennzeichnet, daß die Wirkung des Brillenglases vom einen Wert ungleich Null im oberen Randbereich progressiv zunimmt.

4. Brillenglas nach Anspruch 1 oder 3, dadurch gekennzeichnet, daß nur eine Fläche zum Wirkungsanstieg beiträgt und die andere Fläche sphärisch oder torisch ausgebildet ist.

5. Brillenglas nach einem der Ansprüche 1 bis 4, dadurch gekennzeichnet, daß der Krümmungsradius der Schnittlinien von zum Hauptmeridian ortogonalen Ebenen mit der oder den asphärischen Flächen in dem Bereich, in dem die Flächenbrechkraft ansteigt, zumindest in der Umgebung des Hauptmeridians bei der Vorderfläche abnimmt und bei der Rückfläche zunimmt.

6. Brillenglas nach einem der Ansprüche 1 bis 5, dadurch gekennzeichnet, daß das Brillenglas in seinem unteren Bereich eine nahezu konstante Wirkung hat.

7. Brillenglas nach Anspruch 6, dadurch gekennzeichnet, daß die zum Wirkungsanstieg beitragende Fläche oder Flächen in dem Bereich mit konstanter Wirkung nahezu sphärisch ausgebildet sind.

8. Brillenglas nach einem der Ansprüche 1 bis 7, dadurch gekennzeichnet, daß mindestens eine der beiden Flächen in einem Zylinderkoordinatensystem (y, ρ, φ) folgender Gleichung genügt:

$$\rho\,(\varphi, y) = \sum_{n=0}^{\infty} a_n(y) * \cos\,(n\,k(y)\varphi)$$

in der die $a_n(y)$ so gewählt ist, daß $\rho\,(o, y)$ die Kurve $f(y)$ des Hauptmeridians beschreibt,

$k(y)$ eine vom Nahteil (5) zum Fernteil (3) variierende — vorzugsweise im Bereich von 3 bis 10 monoton ansteigende — Funktion oder eine über die ganze Fläche konstante Zahl — vorzugsweise im Bereich von 3 bis 10 — ist,

und der Krümmungsverlauf

$$F(y) = f''[(y)/(1 + \underline{f}'^2(y)]^{3/2}$$

des Hauptmeridians der Gleichung

$$F(y) = A * [1 - (1 + e^{-c(y + d)}]^{-m}$$

genügt, mit $A = \overline{D}_N - \overline{D}_F$, wobei $\overline{D}_N$ und $\overline{D}_F$ der mittlere Flächenbrechwert im Nahteil (5) bzw. Fernteil (3) ist.

Brillenglas nach Anspruch 8, dadurch gekennzeichnet, dass der Ursprung des Zylinderkoordinatensystems für jeden Horizontalschnitt neu festgelegt ist.

## Claims

1. Spectacle lens for a pair of half-spectacles, characterized in that the spectacle lens comprises at least one aspherical surface whose surface refraction increases progressively from the upper rim zone spectacle lens towards the bottom.

2. Spectacle lens according to Claim 1, characterized in that the spectacle lens has a prismatic effect of zero in the upper edge zone.

3. Spectacle lens according to Claim 1 or 2, characterized in that the efficiency of the spectacle lens undergoes a progressive increase from a value different from zero in the upper edge zone.

4. Spectacle lens according to Claim 1 or 3, characterized in that only one surface contributes to the increase of efficiency whereas the other surface is of a spherical or toric design.

5. Spectacle lens according to any of Claims 1 through 4, characterized in that the radius of curvature of the lines of intersection of planes orthogonal relative to the main meridian, with the aspherical surface or surfaces in the zone of increase of the surface refraction, decreases at least in the vicinity of the main meridian in the front surface while it increases on the rear surface.

6. Spectacle lens according to any of Claims 1 through 5, characterized in that the spectacle lens presents an almost constant efficiency in its lower portion.

7. Spectacle lens according to Claim 6, characterized in that the surface or surfaces contributing to the increase of efficiency are of an almost spherical design in the zone of constant efficiency.

8. Spectacle lens according to any of Claims 1 through 7, characterized in that at least one of the two surfaces in a cylinder coordinate system (y, ρ, φ) satisfies the following equation:

$$\rho\,(\varphi,\,y)\;=\;\sum_{n=0}^{\infty}\;a_n(y)\;*\;\cos\,(n\,k(y)\varphi)$$

wherein the values of $a_n(y)$ are so selected that $\rho\,(\varphi,\,y)$ defines the function line $f(y)$ of the main meridian,

$k(y)$ is a function varying from the near-vision portion (5) towards the distant-vision portion (3) — preferably monotonously increasing within the range from 3 to 10 — or a number which is constant all over the surface — preferably within the range from 3 to 10 ,

and that the line of curvature

$$F(y)\;=\;f''(y)/[1+\underline{f}'^{2}(y)]^{3/2}$$

of the main meridian satisfies the equation

$$F(y)\;=\;A\;*\;[1-(1\;+\;e^{-c(y+d)}]^{-m}$$

wherein $A\;=\;\overline{D}_N-\overline{D}_F$, with $\overline{D}_N$ and $\overline{D}_F$ being the mean surface refraction in the near-vision (5) or distant-vision (3) portion.

9. Spectacle lens according to Claim 8, characterized in that the origin of the cylinder coordinate system is established anew for each horizontal section.


**Revendications**

1. Verre de lunette pour une demi-lunette, caractérisé en ce que le verre de lunette comprend au moins une face asphérique dont la réfringence zonale croît progressivement de la zone marginale supérieure du verre de lunette vers le bas.

2. Verre de lunette selon la Revendication 1, caractérisé en ce que la puissance prismatique est zéro dans la zone marginale supérieure du verre de lunette.

3. Verre de lunette selon la Revendication 1 ou 2, caractérisé en ce que la puissance du verre de lunette progressivement croît d'une valeur différente de zéro dans la zone marginale supérieure.

4. Verre de lunette selon la Revendication 1 ou 3, caractérisé en ce qu'une face seulement contribue à l'augmentation de la puissance pendant que l'autre face est sphérique ou torique.

5. Verre de lunette selon quelconque des Revendications 1 à 4, caractérisé en ce que le rayon de courbure des lignes d'intersection entre des plans orthogonaux relativement au méridien principal, d'une part, et la ou les faces asphériques dans la zone dans laquelle il y a une augmentation de la réfringence zonale, d'autre part, décroît dans la face avant, au moins aux alentours du méridien principal, et croît dans la face arrière.

6. Verre de lunette selon quelconque des Revendications 1 à 5, caractérisé en ce que la puissance dans la zone inférieure du verre de lunette est presque constante.

7. Verre de lunette selon la Revendication 6, caractérisé en ce que la ou les faces qui contribuent à l'augmentation de la puissance dans la zone à puissance constante sont presque sphériques.

8. Verre de lunette selon quelconque des Revendications 1 à 7, caractérisé en ce qu'au moins une des faces satisfait l'équation suivante dans un système de coordonnées cylindrique $(y,\,\rho,\,\phi)$:

$$\rho\,(\varphi,\,y)\;=\;\sum_{n=0}^{\infty}\;a_n(y)\;*\;\cos\,(n\,k(y)\varphi)$$

dans laquelle les valeurs $a_n(y)$ sont si choisies que $\rho\,(\varphi,\,y)$ décrit la courbe $f(y)$ du méridien principal,

$k(y)$ est une fonction qui varie de la plage de vision rapprochée (5) vers la plage de vision lontaine (3), et préférablement croît monotonement dans le régime de 3 à 10, ou est un nombre constant sur toute la face, préférablement dans le régime de 3 jusqu'à 10 et dans laquelle l'allure de la courbure

$$F(y)\;=\;f''(y)/[1+\underline{f}'^{2}(y)]^{3/2}$$

du meridien principal satisfait l'équation

$$F(y)\;=\;A\;*\;(1-[1\;+\;e^{-c(y+d)}]^{-m}$$

dans laquelle $A\;=\;\overline{D}_N-\overline{D}_F,\;\overline{D}_N$ et $\overline{D}_F$ étant la réfringence zonale moyenne dans la plage de vision rapprochée (5) ou lointaine (3).

9. Verre de lunette selon la Revendication 8, caractérisé en ce l'origine du système de coordonnées cylindrique est définie de nouveau pour chaque coupe horizontale.

FIG.1

| PFEILHOEHEN | | | | | | | | | RADIEN (HORIZONTAL) | | | | | | | |
| 28 | 24 | 20 | 16 | 12 | 8 | 4 | 0 | X(MM) | 0 | 4 | 8 | 12 | 16 | 20 | 24 | 28 |
|---|---|---|---|---|---|---|---|---|---|---|---|---|---|---|---|---|
| | | | | | | | | Y(MM) | | | | | | | | |
| 5.907 | 4.471 | 3.155 | 2.071 | 1.261 | 0.732 | 0.449 | 0.363 | 8 | 95 | 83 | 66 | 58 | 63 | 73 | 84 | 85 |
| 5.824 | 4.305 | 2.993 | 1.914 | 1.108 | 0.578 | 0.234 | 0.207 | 6 | 94 | 83 | 66 | 59 | 63 | 78 | 90 | 86 |
| 5.708 | 4.186 | 2.878 | 1.805 | 1.000 | 0.470 | 0.183 | 0.034 | 4 | 92 | 82 | 67 | 60 | 64 | 78 | 91 | 84 |
| 5.637 | 4.112 | 2.811 | 1.748 | 0.942 | 0.413 | 0.117 | 0.024 | 2 | 87 | 80 | 68 | 62 | 65 | 77 | 87 | 81 |
| 5.616 | 4.087 | 2.798 | 1.747 | 0.951 | 0.409 | 0.099 | 0.000 | 0 | 81 | 77 | 69 | 66 | 68 | 75 | 81 | 78 |
| 5.649 | 4.114 | 2.831 | 1.794 | 1.002 | 0.452 | 0.130 | 0.025 | -2 | 76 | 75 | 71 | 69 | 70 | 73 | 76 | 75 |
| 5.736 | 4.196 | 2.916 | 1.884 | 1.095 | 0.540 | 0.211 | 0.103 | -4 | 74 | 73 | 72 | 71 | 71 | 73 | 74 | 74 |
| 5.879 | 4.336 | 3.055 | 2.023 | 1.233 | 0.676 | 0.344 | 0.235 | -6 | 73 | 73 | 72 | 72 | 72 | 72 | 73 | 73 |
| 6.083 | 4.534 | 3.250 | 2.216 | 1.424 | 0.865 | 0.532 | 0.422 | -8 | 73 | 72 | 72 | 72 | 72 | 72 | 72 | 73 |
| 6.346 | 4.791 | 3.502 | 2.465 | 1.670 | 1.109 | 0.775 | 0.664 | -10 | 72 | 72 | 72 | 71 | 71 | 72 | 72 | 72 |
| 6.671 | 5.109 | 3.813 | 2.772 | 1.973 | 1.410 | 1.075 | 0.964 | -12 | 72 | 72 | 71 | 71 | 71 | 71 | 72 | 72 |
| 7.053 | 5.487 | 4.184 | 3.137 | 2.335 | 1.768 | 1.431 | 1.320 | -14 | 72 | 71 | 71 | 71 | 71 | 71 | 71 | 72 |
| 7.503 | 5.927 | 4.616 | 3.562 | 2.755 | 2.185 | 1.846 | 1.734 | -16 | 71 | 71 | 71 | 70 | 70 | 71 | 71 | 71 |
| 8.024 | 6.430 | 5.109 | 4.048 | 3.235 | 2.661 | 2.320 | 2.207 | -18 | 71 | 71 | 70 | 70 | 70 | 70 | 71 | 71 |
| 8.605 | 6.937 | 5.665 | 4.595 | 3.776 | 3.197 | 2.854 | 2.740 | -20 | 70 | 70 | 70 | 69 | 69 | 70 | 70 | 70 |

## FIG.2

R (mm)

100

90

80

70

$B_N$    $B_F$

-40   -30   -20   -10         10    20    30    40   (mm)

y

FIG.3

FIG.4

FIG.5

EP 0 195 774 B1